# EUROPEAN PATENT SPECIFICATION

(11) **EP 2 830 920 B1**
(45) Date of publication and mention of the grant of the patent: **16.05.2018**
(21) Application number: 13770168.6
(22) Date of filing: 21.03.2013
(51) Int. Cl.: B60W 30/16, G08G 1/16

(54) **DEVICE AND METHOD FOR CONVEYING ITINERARY INFORMATION TO A VEHICLE**
VORRICHTUNG UND VERFAHREN ZUR EINSPEISUNG VON FAHRTROUTENINFORMATIONEN IN EIN FAHRZEUG
DISPOSITIF ET PROCÉDÉ POUR TRANSMETTRE DES INFORMATIONS D'ITINÉRAIRE À UN VÉHICULE

(30) Priority: 27.03.2012 SE 1250296
(43) Date of publication of application: 04.02.2015
(73) Proprietor: Scania CV AB, 151 87 Södertälje (SE)
(72) Inventor: SANDBERG, Tony, S-645 44 Strängnäs (SE); STENBERG, Andreas, S-583 34 Linköping (SE)
(74) Representative: Thum, Bernhard
(86) International application number: PCT/SE2013/050316
(87) International publication number: WO 2013/147683

(56) References cited:
- WO-A1-2004/077378
- JP-A- 2000 311 300
- JP-A- 2000 311 300
- JP-A- 2010 009 235
- JP-A- 2011 150 580
- US-A1- 2003 182 183
- US-A1- 2003 182 183
- OLAVERRI-MONREAL C. ET AL.: 'The See-Through System: A VANET-Enabled Assistant for Overtaking Maneuvers' INTELLIGENT VEHICLES SYMPOSIUM (IV), 2010 IEEE. 21 June 2010, pages 123 - 128, XP031732181
- GOMES P. ET AL.: 'Making Vehicles Transparent Through V2V Video Streaming' INTELLIGENT TRANSPORTATION SYSTEMS vol. 13, no. 2, June 2012, pages 930 - 938, XP011445717
- HEDDEBAUT M ET AL.: 'Technical evaluation of an electronic millimeter wave pre-view mirror' VEHICULAR TECHNOLOGY CONFERENCE, 2000. IEEE VTS FALL VTC 2000. 24 September 2000, pages 2025 - 2032, XP010522148

## Description

### TECHNICAL FIELD

The present invention relates to a method for conveying itinerary information to a vehicle according to the preamble of claim 1 and a device according to the preamble of claim 7. The invention relates also to a computer programme product comprising programme code for a computer for implementing a method according to the invention. It relates also to a device and a motor vehicle equipped with the device.

### BACKGROUND

The air resistance to today's vehicles when they are in motion is a factor which affects fuel consumption, particularly in the case for example of trucks and other relatively large vehicles which have a large frontal cross-section.

The air resistance to a following vehicle depends largely on the distance between it and the vehicle in front. In principle it may be stated that the shorter the distance from a leading vehicle, the smaller the air resistance and the greater the possibility of the following vehicle's fuel consumption being reduced. In cases where two or more vehicles form part of a so-called vehicle train, i.e. where following vehicles travel relatively close to those in front, their fuel consumption may for example be reduced by 5-15%. Travelling in vehicle trains may thus reduce fuel costs quite considerably.

A disadvantage of travelling close behind a leading vehicle is potential loss of visibility. In cases where the vehicle travels relatively close to a leading truck with a covered trailer, visibility may be severely limited, which may be disturbing to a driver of the following vehicle. It may also cause him/her to have limited understanding of the reasons for automatic manoeuvres effected by his/her vehicle, e.g. automatic braking or automatic gear choice in a transmission of the vehicle. The limited visibility may cause greater risk of accidents in that the driver's perceptions are thus limited.

US 2003182183 describes various aspects of vehicle trains, e.g. how vehicles may establish communication with one another.

WO2004077378 describes a method for communication of data between vehicles.

### SUMMARY OF THE INVENTION

One object of the present invention is to propose a novel and advantageous method for conveying itinerary information to a vehicle.

Another object of the invention is to propose a novel and advantageous device and a novel and advantageous computer programme for conveying itinerary information to a vehicle.

A further object of the invention is to propose a method, a device and a computer programme for achieving greater traffic situation awareness in vehicle drivers.

A further object of the invention is to propose a method, a device and a computer programme for achieving greater traffic safety.

A further object of the invention is to propose an alternative method, an alternative device and an alternative computer programme for conveying itinerary information to a vehicle.

These objects are achieved with a method for conveying itinerary information to a vehicle according to claim 1.

One aspect of the invention is a proposed method for conveying itinerary Information to a vehicle, comprising the steps of
- conveying itinerary information in the form of visual field images from a leading vehicle to a following vehicle in real time, and
- providing said itinerary information conveyed in said following vehicle in such a way that at least one visual field available in said leading vehicle is continuously made available in said following vehicle.

The result is a better driving experience for a driver of a following vehicle. The method also causes him/her to gain a greater understanding of prevailing traffic situations as well as greater understanding of why the vehicle's automated systems act in a certain way.

In one example, itinerary information may be conveyed up to 1 km, enabling drivers of following vehicles to connect to wireless communication in good time before coming so close to a leading vehicle as to then have only limited forward visibility. In such cases a number of following vehicles may also be part of a vehicle train but still be able to receive itinerary information from a vehicle which is first in said vehicle train. Thus a first vehicle in the train may communicate directly with a number of following vehicles, thereby avoiding unnecessary delays in conveying itinerary information.

The method involves only brief delays in conveying information. It is also easy and inexpensive to install in vehicles. One version also conveys information about a prevailing location of a leading vehicle to one or more following vehicles. This may take place at the same time as said itinerary information is conveyed from a leading vehicle to a following vehicle. Said location information may be conveyed continuously or intermittently. Said location information may be determined by means of a GPS unit.

In the method according to the invention, it is also conveyed to one or more following vehicles information about how a leading vehicle wishes to regulate their speed. This may take place at the same time as said itinerary information is conveyed from a leading vehicle to a following vehicle. Said speed information may be conveyed continuously or intermittently. A control system in a following vehicle may thus receive information about how a leading vehicle will behave in the future, e.g. as regards retardation or acceleration.

An advantage of the present invention is that said itinerary information may comprise information about road signs, animals on the move, other fixed or movable objects, carriageway, the area ahead of a leading vehicle, areas outside the carriageway, roadworks, pedestrians, cyclists or any lane changes effected by the leading vehicle. A driver of a following vehicle may thus gain greater understanding of a prevailing or coming traffic situation.

The method may further comprise the step of
- generating said visual field images by means of a camera configuration on board said leading vehicle. An inexpensive and reliable way of generating said visual field images is thus achieved.

The method may further comprise the step of
- conveying said itinerary information via a wireless communication network which is common to at least two vehicles.

The method may further comprise the step of
- passing said itinerary information on in the form of visual field images from a following vehicle to a further following vehicle, enabling all of the vehicles in quite long vehicle trains to enjoy the advantages of the present invention.

Said vehicles may be part of a vehicle train, making it possible for fuel consumption of a number of vehicles to be with advantage reduced, leading of course to lower operating costs and less adverse impact on the environment.

Said itinerary information conveyed in real time in the form of visual field images may form a video stream.
The method may further comprise the step of
- continuously making a video recording.
The method further comprises the step of
- continuously presenting in said following vehicle said itinerary information conveyed, thereby achieving with advantage greater perception for a driver of said following vehicle.

The method further comprises the step of
- providing said itinerary information conveyed in said following vehicle in such a way that a plurality of visual fields available in said leading vehicle are continuously made available in said following vehicle. The result is a versatile method whereby a driver may choose which views provided from a leading vehicle he/she wishes to look at. Said plurality of visual fields may also cover different visual fields (e.g. forwards and sideways), potentially further increasing a driver's perception.

The method is easy to implement in existing motor vehicles. Software for conveying itinerary information to a vehicle according to the invention may be installed in a control unit of the vehicle during the manufacture of the vehicle. A purchaser of the vehicle may thus have the possibility of selecting the function of the method as an option. Alternatively, software which comprises programme code for conducting the innovative method may be installed in a control unit of the vehicle on the occasion of upgrading at a service station, in which case the software may be loaded into a memory in the control unit. Implementing the innovative method is therefore cost-effective, particularly since few or no further components need be installed in the vehicle according to one aspect of the invention. Many vehicles are for example currently already equipped with a web camera which may be used in one aspect of the invention. Relevant hardware is currently already provided in the vehicle. If the vehicle is not already equipped with it, a suitable camera may easily be connected to a network on board the vehicle. The invention therefore represents a cost-effective solution to the problems indicated above.

Software which comprises programme code for conveying itinerary information is easy to update or replace. Moreover, different parts of the software which comprises programme code for conveying itinerary information to a vehicle may be replaced independently of one another. This modular configuration is advantageous from a maintenance perspective.

One aspect of the invention is a proposed device for conveying itinerary information to a vehicle, according to claim 7.

One aspect of the invention makes it easy to retrofit said device. Existing vehicles may thus be upgraded quickly and relatively inexpensively. Relevant software may easily be installed in a control unit of the vehicle and/or a portable computer which is connectable to a network on board the vehicle. A camera and viewing screen may also need to be installed in cases where the vehicle is not already provided with such facilities.

The device may further comprise
- a camera configuration on board said leading vehicle to generate said visual field images.

The device may further comprise
- at least one further camera configuration on board said leading vehicle to generate said visual field images.

The device may further comprise
- means for conveying said itinerary information via a wireless communication network which is common to at least two vehicles.

The device may further comprise
- means for passing said itinerary information conveyed on in the form of visual field images from a following vehicle to a further following vehicle.

Said device may cause said itinerary information in the form of visual field images conveyed in real time to form a video stream.

The device may further comprise
- means for continuously making a video recording.

The device may further comprise
- means for continuously presenting said itinerary information conveyed in said following vehicle.

The device further comprises
- means for providing said itinerary information conveyed in said following vehicle in such a way that a plurality of visual fields available in said leading vehicle are continuously made available in said following vehicle.

One aspect of the invention is a proposed device for receiving in a vehicle itinerary information sent from a leading vehicle, comprising
- means for receiving in a following vehicle itinerary information in the form of visual field images from said leading vehicle in real time,
- means for providing said itinerary information received in said following vehicle in such a way that at least one visual field available in said leading vehicle is continuously made available in said following vehicle.

The device for receiving itinerary information may further comprise a camera configuration on board said leading vehicle to generate said visual field images. It may further comprise means for conveying said leading vehicle via a wireless communication network which is common to at least two vehicles. It may further comprise means for passing said itinerary information received in the form of visual field images on to a further following vehicle. Said itinerary information conveyed in real time in the form of visual field images may form a video stream. The device for receiving itinerary information may further comprise means for continuously making a video recording. It may further comprise means for continuously presenting to a driver said itinerary information received. It may further comprise means for providing said itinerary information received in such a way that a plurality of visual fields available in said leading vehicle are continuously made available, e.g. by presentation by means of a viewing device.

One aspect of the invention is a proposed device for sending from a vehicle itinerary information generated in said vehicle, comprising
- means for generating and sending itinerary information in the form of visual field images from the vehicle to a following vehicle in real time,
- means for, when appropriate, providing itinerary information received in such a way that at least one visual field available in a leading vehicle is continuously made available in said vehicle.

The device for sending itinerary information may further comprise a camera configuration on board the vehicle to generate said visual field images. It may further comprise means for conveying said itinerary information via a wireless communication network which is common to at least two vehicles. It may further comprises means for passing itinerary information received in the form of visual field images on to a further following vehicle. Said itinerary information conveyed in real time in the form of visual field images may form a video stream. The device for sending itinerary information may further comprise means for continuously making a video recording. It may further comprise means for continuously presenting for a driver said itinerary information received. It may further comprise means for providing said itinerary information received in such a way that a plurality of visual fields available in a leading vehicle are continuously made available, e.g. by presentation by means of a viewing device.

The above objects are also achieved with a motor vehicle which is provided with the innovative device for receiving itinerary information from a leading vehicle. The vehicle may be a truck, bus or car.

The above objects are also achieved with a motor vehicle which is provided with the innovative device for sending itinerary information from a leading vehicle to a following vehicle. The vehicle may be a truck, bus or car.

One aspect of the invention is a proposed computer programme for conveying itinerary information to a vehicle, which programme comprises programme code stored on a computer-readable medium for causing an electronic control unit or another computer connected to the electronic control unit to perform steps according to any one of claims 1-6.

One aspect of the invention is a proposed computer programme for conveying itinerary information to a vehicle, which programme comprises programme code for causing an electronic control unit or another computer connected to the electronic control unit to perform steps according to any one of claims 1-6.

One aspect of the invention is a proposed computer programme product comprising a programme code stored on a computer-readable medium for performing method steps according to any one of claims 1-6 when said computer programme is run on an electronic control unit or another computer connected to the electronic control unit.

One aspect of the invention is a proposed computer programme for receiving itinerary information from a leading vehicle, which programme comprises programme code stored on a computer-readable medium for causing an electronic control unit or another computer connected to the electronic control unit to perform the steps of
- receiving on board a following vehicle itinerary information in the form of visual field images from said leading vehicle, and
- providing said itinerary information received in said following vehicle in such a way that at least one visual field available in said leading vehicle is continuously made available in said following vehicle.

One aspect of the invention is a proposed computer programme for receiving itinerary information from a leading vehicle, which programme comprises programme code for causing an electronic control unit or another computer connected to the electronic control unit to perform the steps of
- receiving on board a following vehicle itinerary information in the form of visual field images from said leading vehicle, and
- providing said itinerary information received in said following vehicle in such a way that at least one visual field available in said leading vehicle is continuously made available in said following vehicle.

One aspect of the invention is a proposed computer programme for sending from a vehicle itinerary information generated in said vehicle, which programme comprises programme code stored on a computer-readable medium for causing an electronic control unit or another computer connected to the electronic control unit to perform the steps of
- generating and sending itinerary information in the form of visual field images from the vehicle to a following vehicle in real time,
- providing, when appropriate, itinerary information received in such a way that at least one visual field available in a following vehicle is continuously made available in said vehicle.

One aspect of the invention is a proposed computer programme for sending from a vehicle itinerary information generated in said vehicle, which programme comprises programme code for causing an electronic control unit or another computer connected to the electronic control unit to perform the steps of
- generating and sending itinerary information in the form of visual field images from the vehicle to a following vehicle in real time,
- providing, when appropriate, itinerary information received in such a way that at least one visual field available in a following vehicle is continuously made available in said vehicle.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations are used for similar items in the various diagrams and
Figure 1 schematically illustrates a vehicle according to an embodiment of the invention,
Figure 2 schematically illustrates a device on board the vehicle depicted in Figure 1, according to an embodiment of the invention,
Figure 3a schematically illustrates a visual field for a driver in a following vehicle,
Figure 3b schematically illustrates a visual field for a driver in a following vehicle, according to an embodiment of the invention,
Figure 4a is a schematic flowchart of a method according to an embodiment of the invention,
Figure 4b is a more detailed schematic flowchart of a method according to an embodiment of the invention, and
Figure 5 schematically illustrates a computer according to an embodiment of the invention.

### DETAILED DESCRIPTION OF THE DRAWINGS

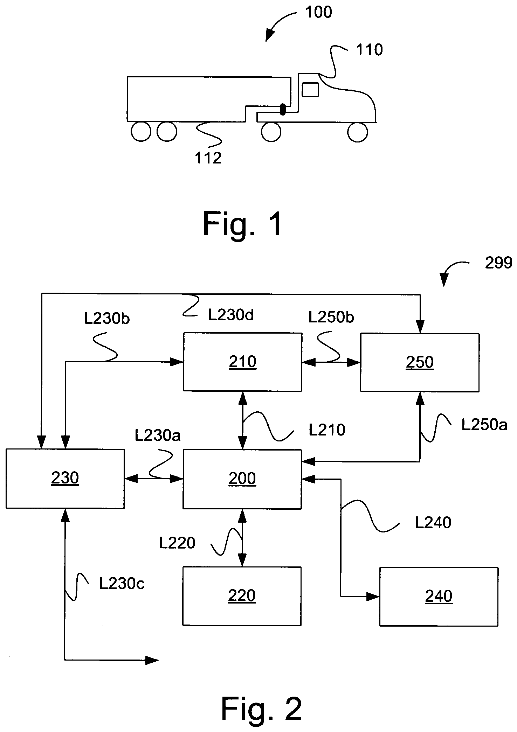

Figure 1 depicts a side view of a vehicle 100. The vehicle here exemplified comprises a tractor unit 110 and a trailer 112. It may be a heavy vehicle, e.g. a truck or a bus. It may alternatively be a car.

The term "link" refers herein to a communication link which may be a physical connection such as an opto-electronic communication line, or a non-physical connection such as a wireless connection, e.g. a radio link or microwave link.

The term "vehicle train" refers herein to a number of vehicles, e.g. trucks, following one another at spacing of less than a predetermined value, e.g. 50 metres, 25 metres or 10 metres. Said spacing is a maximum distance which makes it possible to achieve reduced air resistance for a following vehicle. The particular spacing depends on the size and shape of the vehicles.

Figure 2 depicts a device 299 on board the vehicle 100. The device is situated in the tractor unit 110.

The vehicles which form a vehicle train may all be equipped with the device 299. Any of them may thus lead the train or be a following vehicle.

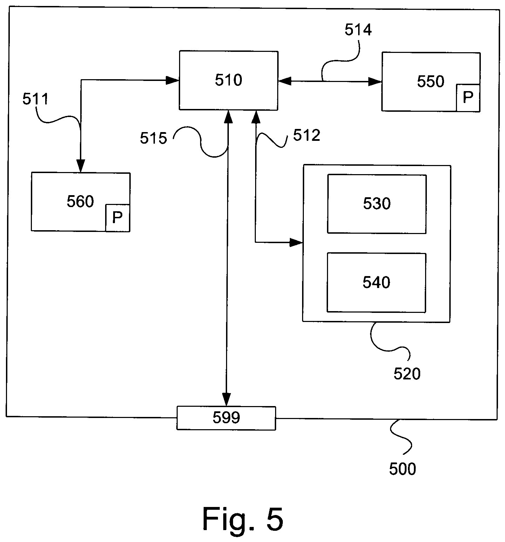

The device 299 comprises a control unit 200 which is provided with electronics and software described in more detail with reference to Figure 5.

A control unit 200 in a leading vehicle is adapted to conveying itinerary information in the form of visual field images to a following vehicle in real time. A control unit 200 in said following vehicle is adapted to providing said itinerary information conveyed in real time in such a way that at least one visual field available in said leading vehicle is continuously made available in said following vehicle. The control unit 200 is adapted to conveying said itinerary information via a wireless communication network which is common to at least two vehicles, e.g. said leading vehicle and following vehicle. The control unit 200 on board a following vehicle is adapted to passing said itinerary information conveyed on in the form of visual field images to a further following vehicle. The control unit 200 in said following vehicle is adapted to continuously presenting in said following vehicle said itinerary information conveyed. The control unit 200 in said following vehicle is adapted to continuously providing said itinerary information conveyed in said following vehicle so that a plurality of visual fields available in said leading vehicle are continuously made available in said following vehicle.

A computer device 210 is arranged for communication with the first control unit 200 via a link L210. The computer device 210 may be detachably connected to the first control unit. It may be adapted to being powered by means of a battery with which the vehicle is already provided, e.g. a 24 V battery which heavy vehicles are currently provided with. It may be a control unit external to the vehicle. It may be a conventional portable computer. It may be adapted to performing method steps according to the invention. It may be used to cross-load software to the control unit 200, particularly software for conducting the innovative method. It may alternatively be arranged for communication with the first control unit 200 via an internal network of the vehicle. It may be adapted to performing substantially similar functions to the first control unit, e.g. conveying to a following vehicle the signal received S320 which contains itinerary information in the form of visual field images. It may also be adapted to providing itinerary information conveyed from a leading vehicle in such a way that at least one visual field available in said leading vehicle is continuously made available in the vehicle in which it is situated.

A GPS unit 220 is arranged for communication with the control unit 200 and is adapted to continuously determining a prevailing location of the vehicle 100. It is adapted to continuously sending signals S220 which contain information about a prevailing location of the vehicle to the control unit 200 via the link L220.

The device 299 is adapted to continuously sending information comprising details of a prevailing location to a following vehicle. The vehicle 100 may also be equipped with sensors (not depicted) which can provide details of vehicle speed and vehicle acceleration (also retardation). The device 299 may also be adapted to determining information comprising details of a desired speed or a coming braking. This information may be automatically conveyed to a following vehicle together with said itinerary data. A control system on board a following vehicle may thus receive said details and conduct automatic control of, for example, engine, transmission and/or a brake system.

In one version, the vehicle 100 is equipped with a radar system (not depicted) which may be adapted to continuously determining a distance from a vehicle in front, which may thus be set automatically, enabling a control system of the vehicle to automatically control the vehicle's operation so as to achieve a desired distance from a vehicle in front.

Sensor means 230 are arranged for communication with the control unit 200 via a link L230a and are adapted to continuously registering visual field images. These sensor means are adapted to continuously generating signals S230 which comprise itinerary information in the form of visual field images. The sensor means are adapted to continuously sending a signal S230 comprising said itinerary information in the form of visual field images to the control unit 200 via the link L230a. The control unit 230 is adapted to sending said signal S230 on to at least one following vehicle via communication means 250.

In one version, the sensor means 230 are adapted to continuously sending a signal S230 comprising said itinerary information in the form of visual field images via a link 230d to communication means 250 which are adapted to sending said signal S230 on to at least one following vehicle.

In one version, the sensor means 230 are adapted to continuously sending a signal S230 comprising said itinerary information in the form of visual field images directly to a following vehicle via a link L230c.

In an alternative version, said sensor means 230 are adapted to sending signals S230 comprising itinerary information in the form of visual field images from a leading vehicle to the computer 210 via a link L230b in real time. Said sensor means are in this case adapted to conveying itinerary information in the form of visual field images directly to said computer via the link L230b in real time. In this version, signals S230 comprising said itinerary information are therefore not sent directly to the control unit 200 for passing on to at least one following vehicle. In this version, signals S230 comprising said itinerary information are thus not sent directly to said at least one following vehicle.

In this version, the computer 210 is adapted to passing said signals S230 comprising itinerary information in the form of visual field images on to communication means 250 via a link L250b. Alternatively, the computer is adapted to passing said signals S230 comprising itinerary information in the form of visual field images on to communication means 250 via a control unit 200, i.e. via the link L210 and a link L250a.

In an alternative version, said sensor means 230 are adapted to conveying itinerary information in the form of visual field images from a leading vehicle to a following vehicle in real time. In this case they are adapted to conveying itinerary information in the form of visual field images directly to a following vehicle and/or at least one further following vehicle in real time. In this version, signals S230 containing said itinerary information are thus not sent to the control unit 200 or said computer 210 for passing on to at least one following vehicle.

Said sensor means 230 may be a camera. Said sensor means may be a video camera. Said sensor means may be a web camera.

In one version, said sensor means 230 comprise a number of cameras, e.g. web cameras. Said plurality of cameras may be set to continuously film different visual fields comprising itinerary information, which information may be conveyed to at least one following vehicle. Said visual fields may at least partly overlap.

Viewing means 240 are arranged for communication with the control unit 200 via a link L240. They may comprise a viewing screen. They are adapted to continuously receiving signals conveyed S230 containing itinerary information, e.g. in the form of a video stream. They may be adapted to presenting in said following vehicle in real time said itinerary information received in such a way that at least one visual field available in said leading vehicle is continuously made available in said following vehicle.

In one version, the viewing means 240 may be adapted to presenting two or more video recordings at the same time, in different windows of the viewing device, enabling a driver in a following vehicle to use suitable means for choosing which video streams he/she wishes to view. The size of the windows for the respective video streams received which contain itinerary information from respective visual fields of said vehicle in front may be set in suitable ways.

Said viewing means 240 may comprise a releasably connected viewing screen which may be a touch screen. They may constitute an integral component of the vehicle's dashboard or controls section.

Said communication means 250 are arranged for communication with the control unit 200 via the link L250a and are adapted to receiving the signal S230 which contains said itinerary information. Said communication means are adapted to sending said signal S230 to at least one following vehicle. They may in one example be arranged for wireless communication and in that case to sending said information, using standard 802.11 ABGN. They may in one example be arranged for wireless communication according to 802.11 P.

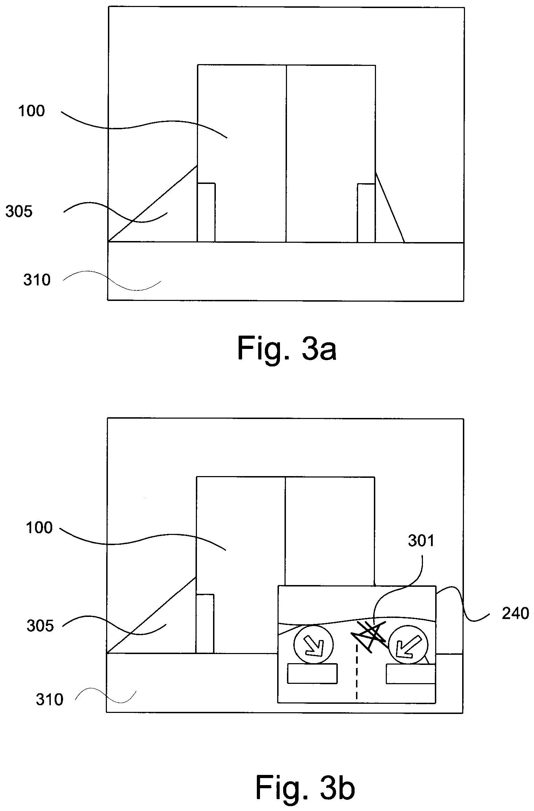

Figure 3a illustrates schematically a visual field for a driver driving his/her vehicle rather close behind a following vehicle in a vehicle train.

In this example of a visual field for a driver of a following vehicle, visibility is obscured by a vehicle in front 100 travelling along a road 305. An instrument panel 310 is illustrated schematically. The drawing illustrates the problems and the undesirable effects which arise from a following vehicle travelling relatively close behind a leading vehicle, as is often the case in the state of the art. The driver of the following vehicle has in this case a rather limited view of the surroundings because his/her visibility is limited by said vehicle in front.

Figure 3b illustrates schematically a visual field for a driver driving his/her vehicle rather close behind a following vehicle in a vehicle train, according to an embodiment of the invention.

According to the invention, the viewing device 240 is for example situated on the dashboard 310 in a cab of the vehicle. The viewing means 240 are adapted to showing an image stream in real time in such a way that at least one visual field available in the leading vehicle 100 is continuously made available in the vehicle following which carries the driver.

The viewing means 240 are adapted to showing an image stream in real time in such a way that at least one visual field available in the leading vehicle is continuously made available in the vehicle following which carries the driver.

In this example, a video stream is presented, showing that there are obstacles 301 on the road 305 in front of the leading vehicle 100 and roadsigns indicating a temporary diversion, requiring reduced speed for vehicles negotiating it. The driver of the following vehicle may thus gain greater traffic understanding and more potential for taking precautionary action, e.g. braking to lower a prevailing speed to a more suitable level.

In an example where the following vehicle runs with automatic speed adjustment, the driver may thus understand better why the vehicle's control system automatically reduces a prevailing speed of the vehicle.

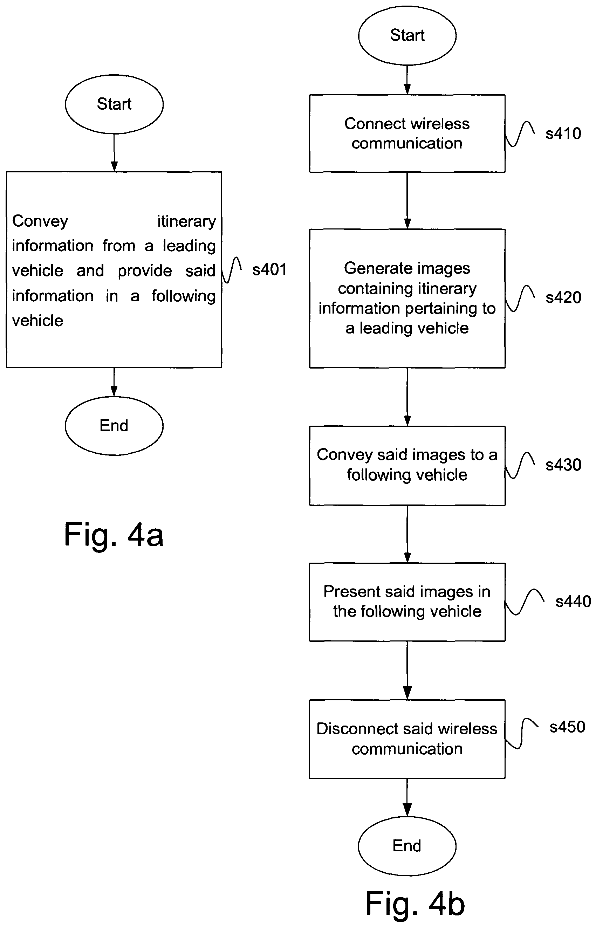

Figure 4a is a schematic flowchart of a method for conveying itinerary information to a vehicle, according to an embodiment of the invention. It comprises a first step s401 comprising the steps of
- conveying itinerary information in the form of visual field images from a leading vehicle to a following vehicle in real time, and
- providing said itinerary information conveyed in said following vehicle in such a way that at least one visual field available in said leading vehicle is continuously made available in said following vehicle. The method ends after step s401.

Figure 4b is a schematic flowchart of a method for conveying itinerary information to a vehicle, according to an embodiment of the invention.

The method comprises a first step s410 comprising the step of at least one following vehicle connecting itself for wireless communication via a communication link to a vehicle in front. In an alternative version, a leading vehicle may connect itself for wireless communication to a following vehicle. Step s410 is followed by a step s420.

Method step s420 comprises the step of continuously generating itinerary information in the form of visual field images by means of a camera configuration on board said leading vehicle. Said visual field images may form a continuous or intermittent video stream. Step s420 is followed by a step s430.

Method step s430 comprises the step of conveying said itinerary information in real time via a wireless communication network which is common to at least two vehicles and may take the form of the wireless communication link connected at step s410. Step s430 may comprise the step of passing said itinerary information conveyed in the form of visual field images on from a following vehicle to a further following vehicle. Step s430 is followed by a step s440.

Method step s440 comprises the step of continuously presenting in said following vehicle said itinerary information conveyed. It comprises providing said itinerary information in said following vehicle in such a way that at least one visual field available in said leading vehicle is continuously made available in said following vehicle. Step s440 may comprise the step of providing said itinerary information in said following vehicle in such a way that a plurality of visual fields available in said leading vehicle are continuously made available in said following vehicle. Step s440 is followed by a step s450.

Method step s450 comprises the step of disconnecting said wireless communication link, which may be done manually by a driver or automatically by the control unit 200. The method ends after step s450.

Figure 5 is a diagram of a version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for conveying itinerary information in the form of visual field images from a leading vehicle to a following vehicle in real time, according to one aspect of the innovative method. The programme comprises routines for providing said itinerary information in said following vehicle in real time in such a way that at least one visual field available in said leading vehicle is continuously made available in said following vehicle. It comprises routines for conveying said itinerary information via a wireless communication network which is common to at least two vehicles, e.g. said leading and following vehicles. It comprises routines for passing said itinerary information conveyed in the form of visual field images on from a following vehicle to a further following vehicle. It comprises routines for continuously presenting in said following vehicle said itinerary information conveyed. It comprises routines for providing said itinerary information in said following vehicle in such a way that a plurality of visual fields available in said leading vehicle are continuously made available in said following vehicle.

The programme P may be stored in an executable form or in compressed form in a memory 560 and/or in a read/write memory 550.

Where it is stated that the data processing unit 510 performs a certain function, it means that it conducts a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit via a data bus 514. The links L210, L220, L230a, L230b, L240, L250a and L250b for example may be connected to the data port (see Figure 2).

When data are received on the data port 599, they are stored temporarily in the second memory element 540. When input data received have been temporarily stored, the data processing unit 510 will be ready to conduct code execution as described above. In one version, signals received on the data port contain itinerary information associated with at least one visual field of a leading vehicle. In one version, signals received on the data port contain itinerary information in the form of video images. The signals received on the data port may be used by the device 500 to provide itinerary information conveyed from a leading vehicle to a following vehicle in such a way that at least one visual field available in said leading vehicle is continuously made available in said following vehicle.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method for conveying itinerary information to a vehicle (100) in a vehicle train, the vehicle train comprises:
one leading vehicle and at least one following vehicle and
wherein the leading vehicle being traveling close to the following vehicle for reducing the air resistance of the following vehicle and consequently for reducing the fuel consumption of the following vehicle,
**characterised by** the steps of
- travelling with a following vehicle (100) in a predetermined distance less than 50 metres to the leading vehicle (100),
- conveying itinerary information in the form of visual field images from the leading vehicle (100) to the following vehicle (100) comprised in said vehicle train in real time,
- providing (s440) said itinerary information conveyed in said following vehicle (100) in such a way that a plurality of visual fields available in said leading vehicle (100) are continuously made available in said following vehicle (100);
- continuously presenting (s440) said itinerary information conveyed in said following vehicle (100) in which said itinerary information being conveyed in real time in the form of a video stream; and
- conveying from the leading vehicle (100) to the following vehicle (100) information about how said leading vehicle (100) wishes to regulate its speed.

2. A method according to claim 1, further comprising the step of
- generating (s420) said visual field images by means of a camera configuration (230) on board said leading vehicle (100).

3. A method according to claim 1 or 2, further comprising the step of
- conveying (s430) said itinerary information via a wireless communication network which is common to at least two vehicles (100).

4. A method according to any one of the foregoing claims, further comprising the step of
- passing (s430) said itinerary information conveyed on in the form of visual field images from a following vehicle (100) to a further following vehicle (100).

5. A method according to any one of the foregoing claims, further comprising the step of
- the leading vehicle continuously making (s420) a video recording.

6. A method according to any one of the foregoing claims, wherein the predetermined distance between the leading vehicle (100) and the following vehicle (100) is less than 25 metres, preferably less than 10 metres.

7. A device for conveying itinerary information to a vehicle (100) in a vehicle train, the vehicle train comprises one leading vehicle and at least one following vehicle and wherein the device enables the leading vehicle to travel close in a predetermined distance to the following vehicle for reducing the air resistance of the following vehicle and consequently for reducing the fuel consumption of the following vehicle, **characterised in that** said
predetermined distance between the leading vehicle (100) and the following vehicle (100) is less than 50 metres and
ih that the device comprises:
- means (200; 210; 230; 250) for conveying itinerary information in the form of visual field images from a leading vehicle (100) to a following vehicle (100) comprised in said vehicle train in real time,
- means (200; 210; 240) for providing said itinerary information conveyed in said following vehicle (100) in such a way that a plurality of visual fields are available in said leading vehicle (100) are continuously made available in said following vehicle (100);
- means (200; 210; 240) for continuously presenting said itinerary information conveyed in said following vehicle (100) in which said itinerary information being conveyed in real time in the form of a video stream; and
- means for conveying from the leading vehicle (100) to the following vehicle (100) information about how said leading vehicle (100) wishes to regulate its speed.

8. A device according to claim 7, further comprising
- a camera configuration (230) on board said leading vehicle (100) to generate said visual field images.

9. A device according to claim 7 or 8, further comprising
- means for conveying said itinerary information via a wireless communication network which is common to at least two vehicles.

10. A device according to any one of claims 7-9, further comprising
- means (200; 210; 230; 250) for passing said itinerary information conveyed on in the form of visual field images from a following vehicle (100) to a further following vehicle (100).

11. A device according to any one of claims 7-10, further comprising
- means (230) for continuously making a video recording.

12. A device according to any one of claims 7-11, wherein the predetermined distance between the leading vehicle (100) and the following vehicle (100) is less than 25 metres, preferably less then 10 metres.

13. A computer programme (P) for conveying itinerary information to a vehicle, which programme (P) comprises programme code for causing an electronic control unit (200;500) or another computer (210; 500) connected to the electronic control unit (200; 500)to perform steps according to any one of claims 1-6.

14. A computer programme product comprising a programme code stored on a computer-readable medium for performing method steps according to any one of claims 1-6 when said computer programme is run on an electronic control unit (200; 500) or another computer (210; 500) connected to the electronic control unit (200; 500).

## Patentansprüche

1. Verfahren zum Übermitteln von Fahrtrouteninformationen an ein Fahrzeug (100) in einem Fahrzeugzug, wobei der Fahrzeugzug umfasst:
ein vorausfahrendes Fahrzeug und mindestens ein folgendes Fahrzeug, und
wobei das vorausfahrende Fahrzeug nahe an dem folgenden Fahrzeug fährt, um den Luftwiderstand des folgenden Fahrzeugs zu reduzieren, und folglich um den Kraftstoffverbrauch des folgenden Fahrzeugs zu reduzieren,
**gekennzeichnet durch** folgende Schritte
- Fahren mit einem folgenden Fahrzeug (100) in einem vorbestimmten Abstand von weniger als 50 Metern zu dem vorausfahrenden Fahrzeug (100),
- Übermitteln von Fahrtrouteninformationen in der Form von Sehfeldbildern von dem vorausfahrenden Fahrzeug (100) an das folgende Fahrzeug (100), das zu dem Fahrzeugzug gehört, in Echtzeit,
- Bereitstellen (s440) der Fahrtrouteninformationen, die in dem folgenden Fahrzeug (100) übermittelt werden, so dass eine Vielzahl von Sehfeldern, die in dem vorausfahrenden Fahrzeug (100) verfügbar sind, in dem folgenden Fahrzeug (10) fortlaufend zur Verfügung gestellt wird;
- fortlaufendes Präsentieren (s440) der Fahrtrouteninformationen, die in dem folgenden Fahrzeug (100) übermittelt werden, wobei die Fahrtrouteninformationen in der Form eines Video-Streams in Echtzeit übermittelt werden; und
- Übermitteln von dem vorausfahrenden Fahrzeug (100) an das folgende Fahrzeug (100) von Informationen darüber, wie das vorausfahrende Fahrzeug (100) seine Geschwindigkeit regulieren möchte.

2. Verfahren nach Anspruch 1, ferner umfassend den Schritt des
- Generierens (s420) der Sehfeldbilder anhand einer Kamerakonfiguration (230) an Bord des vorausfahrenden Fahrzeugs (100).

3. Verfahren nach Anspruch 1 oder 2, ferner umfassend den Schritt des
- Übermittelns (s430) der Fahrtrouteninformationen über ein drahtloses Kommunikationsnetzwerk, das mindestens zwei Fahrzeugen (100) gemeinsam ist.

4. Verfahren nach einem der vorhergehenden Ansprüche, ferner umfassend den Schritt des
- Weitergebens (s430) der Fahrtrouteninformationen, die in der Form von Sehfeldbildern übermittelt werden, von einem folgenden Fahrzeug (100) an ein weiteres folgendes Fahrzeug (100).

5. Verfahren nach einem der vorhergehenden Ansprüche, ferner umfassend den Schritt des
- fortlaufenden Aufnehmens (s420) einer Videoaufzeichnung durch das vorausfahrende Fahrzeug.

6. Verfahren nach einem der vorhergehenden Ansprüche, wobei der vorbestimmte Abstand zwischen dem vorausfahrenden Fahrzeug (100) und dem folgenden Fahrzeug (100) kleiner als 25 Meter, bevorzugt kleiner als 10 Meter ist.

7. Vorrichtung zum Übermitteln von Fahrtrouteninformationen an ein Fahrzeug (100) in einem Fahrzeugzug, wobei der Fahrzeugzug ein vorausfahrendes Fahrzeug und mindestens ein folgendes Fahrzeug umfasst, und wobei es die Vorrichtung dem vorausfahrenden Fahrzeug ermöglicht, in einem vorbestimmten Abstand nahe an dem folgenden Fahrzeug zu fahren, um den Luftwiderstand des folgenden Fahrzeugs zu reduzieren, und um folglich den Kraftstoffverbrauch des folgenden Fahrzeugs zu reduzieren, **dadurch gekennzeichnet, dass** der vorbestimmte Abstand zwischen dem vorausfahrenden Fahrzeug (100) und dem folgenden Fahrzeug (100) weniger als 50 Meter beträgt, und dass die Vorrichtung umfasst:
- Mittel (200; 210; 230; 250) zum Übermitteln von Fahrtrouteninformationen in der Form von Sehfeldbildern von einem vorausfahrenden Fahrzeug (100) an ein folgendes Fahrzeug (100), das zu dem Fahrzeugzug gehört, in Echtzeit,
- Mittel (200; 210; 240) zum Bereitstellen der Fahrtrouteninformationen, die in dem folgenden Fahrzeug (100) übermittelt werden, so dass eine Vielzahl von Sehfeldern, die in dem vorausfahrenden Fahrzeug (100) verfügbar ist, in dem folgenden Fahrzeug (100) fortlaufend zur Verfügung gestellt wird;
- Mittel (200; 210; 240) zum fortlaufenden Präsentieren der Fahrtrouteninformationen, die in dem folgenden Fahrzeug (100) übermittelt werden, wobei die Fahrtrouteninformationen in der Form eines Video-Streams in Echtzeit übermittelt werden; und
- Mittel zum Übermitteln von dem vorausfahrenden Fahrzeug (100) an das folgende Fahrzeug (100) von Informationen darüber, wie das vorausfahrende Fahrzeug (100) seine Geschwindigkeit zu regulieren wünscht.

8. Vorrichtung nach Anspruch 7, ferner umfassend
- eine Kamerakonfiguration (230) an Bord des vorausfahrenden Fahrzeugs (100), um die Sehfeldbilder zu generieren.

9. Vorrichtung nach Anspruch 7 oder 8, ferner umfassend
- Mittel zum Übermitteln der Fahrtrouteninformationen über ein drahtloses Kommunikationsnetzwerk, das mindestens zwei Fahrzeugen gemeinsam ist.

10. Vorrichtung nach einem der Ansprüche 7 bis 9, ferner umfassend
- Mittel (200; 210; 230; 250) zum Weitergeben der Fahrtrouteninformationen, die in der Form von Sehfeldbildern übermittelt werden, von einem folgenden Fahrzeug (100) an ein weiteres folgendes Fahrzeug (100).

11. Vorrichtung nach einem der Ansprüche 7 bis 10, ferner umfassend
- Mittel (230) zum fortlaufenden Aufnehmen einer Videoaufzeichnung.

12. Vorrichtung nach einem der Ansprüche 7 bis 11, wobei der vorbestimmte Abstand zwischen dem vorausfahrenden Fahrzeug (100) und dem folgenden Fahrzeug (100) weniger als 25 Meter, bevorzugt weniger als 10 Meter beträgt.

13. Computerprogramm (P) zum Übermitteln von Fahrtrouteninformationen an ein Fahrzeug, wobei das Programm (P) Programmcode umfasst, um zu bewirken, dass eine elektronische Steuereinheit (200; 500) oder ein anderer Computer (210; 500), der mit der elektronischen Steuereinheit (200; 500) verbunden ist, die Schritte nach einem der Ansprüche 1 bis 6 ausführt.

14. Computerprogrammprodukt, umfassend Programmcode, der auf einem computerlesbaren Medium gespeichert ist, um die Verfahrensschritte nach einem der Ansprüche 1 bis 6 auszuführen, wenn das Computerprogramm auf einer elektronischen Steuereinheit (200; 500) oder einem anderen Computer (210; 500), der mit der elektronischen Steuereinheit (200; 500) verbunden ist, abläuft.

## Revendications

1. Procédé pour transmettre des informations d'itinéraire à un véhicule (100) dans un train de véhicules, le train de véhicules comprend :
un véhicule de tête et au moins un véhicule suiveur, et
le véhicule de tête se déplaçant près du véhicule suiveur pour réduire la résistance à l'air du véhicule suiveur et, par conséquent, réduire la consommation de carburant du véhicule suiveur,
**caractérisé par** les étapes :
- se déplacer avec un véhicule suiveur (100) à une distance prédéterminée de moins de 50 m du véhicule de tête (100),
- transmettre des informations d'itinéraire sous la forme d'images de champ visuel du véhicule de tête (100) au véhicule suiveur (100) inclus dans ledit train de véhicules en temps réel,
- fournir (s440) lesdites informations d'itinéraire transmises dans ledit véhicule suiveur (100) d'une manière telle qu'une pluralité de champs visuels disponibles dans ledit véhicule de tête (100) sont rendus disponibles de manière continue dans ledit véhicule suiveur (100) ;
- présenter (s440) de manière continue lesdites informations d'itinéraire transmises dans ledit véhicule suiveur (100) dans lequel lesdites informations d'itinéraire sont transmises en temps réel sous la forme d'un flux vidéo ; et
- transmettre, du véhicule de tête (100) au véhicule suiveur (100), des informations sur la manière dont ledit véhicule de tête (100) souhaite réguler sa vitesse.

2. Procédé selon la revendication 1, comprenant en outre l'étape :
- générer (s420) lesdites images de champ visuel au moyen d'une configuration de caméra (230) à bord dudit véhicule de tête (100).

3. Procédé selon la revendication 1 ou 2, comprenant en outre l'étape :
- transmettre (s430) lesdites informations d'itinéraire par l'intermédiaire d'un réseau de communication sans fil qui est commun à au moins deux véhicules (100).

4. Procédé selon l'une quelconque des revendications précédentes, comprenant en outre l'étape :
- faire passer (s430) lesdites informations d'itinéraire transmises sous la forme d'images de champ visuel d'un véhicule suiveur (100) à un autre véhicule suiveur (100).

5. Procédé selon l'une quelconque des revendications précédentes, comprenant en outre l'étape :
- le véhicule de tête réalisant (s420) un enregistrement vidéo de manière continue.

6. Procédé selon l'une quelconque des revendications précédentes, dans lequel la distance prédéterminée entre le véhicule de tête (100) et le véhicule suiveur (100) est de moins de 25 mètres, de préférence de moins de 10 mètres.

7. Dispositif pour transmettre des informations d'itinéraire à un véhicule (100) dans un train de véhicules, le train de véhicules comprenant un véhicule de tête et au moins un véhicule suiveur, et le dispositif permettant au véhicule de tête de se déplacer près du véhicule suiveur à une distance prédéterminée pour réduire la résistance à l'air du véhicule suiveur et, par conséquent, réduire la consommation de carburant du véhicule suiveur,
**caractérisé par le fait que** ladite distance prédéterminée entre le véhicule de tête (100) et le véhicule suiveur (100) est de moins de 50 mètres, et **par le fait que** le dispositif comprend :
- des moyens (200 ; 210 ; 230 ; 250) pour transmettre des informations d'itinéraire sous la forme d'images de champ visuel d'un véhicule de tête (100) à un véhicule suiveur (100) inclus dans ledit train de véhicules en temps réel,
- des moyens (200 ; 210 ; 240) pour fournir lesdites informations d'itinéraire transmises dans ledit véhicule suiveur (100) d'une manière telle qu'une pluralité de champs visuels disponibles dans ledit véhicule de tête (100) sont rendus disponibles de manière continue dans ledit véhicule suiveur (100) ;
- des moyens (200 ; 210 ; 240) pour présenter de manière continue lesdites informations d'itinéraire transmises dans ledit véhicule suiveur (100) dans lequel lesdites informations d'itinéraire sont transmises en temps réel sous la forme d'un flux vidéo ; et
- des moyens pour transmettre, du véhicule de tête (100) au véhicule suiveur (100), des informations sur la manière dont ledit véhicule de tête (100) souhaite réguler sa vitesse.

8. Dispositif selon la revendication 7, comprenant en outre :
- une configuration de caméra (230) à bord dudit véhicule de tête (100) pour générer lesdites images de champ visuel.

9. Dispositif selon la revendication 7 ou 8, comprenant en outre :
- des moyens pour transmettre lesdites informations d'itinéraire par l'intermédiaire d'un réseau de communication sans fil qui est commun à au moins deux véhicules.

10. Dispositif selon l'une quelconque des revendications 7 à 9, comprenant en outre :
- des moyens (200 ; 210 ; 230 ; 250) pour faire passer lesdites informations d'itinéraire transmises sous la forme d'images de champ visuel d'un véhicule suiveur (100) à un autre véhicule suiveur (100).

11. Dispositif selon l'une quelconque des revendications 7 à 10, comprenant en outre :
- des moyens (230) pour réaliser un enregistrement vidéo de manière continue.

12. Dispositif selon l'une quelconque des revendications 7 à 11, dans lequel la distance prédéterminée entre le véhicule de tête (100) et le véhicule suiveur (100) est de moins de 25 mètres, de préférence de moins de 10 mètres.

13. Programme d'ordinateur (P) pour transmettre des informations d'itinéraire à un véhicule, lequel programme (P) comprend un code de programme pour amener une unité de commande électronique (200 ; 500) ou un autre ordinateur (210 ; 500) connecté à l'unité de commande électronique (200 ; 500) à réaliser les étapes selon l'une quelconque des revendications 1 à 6.

14. Produit programme d'ordinateur comprenant un code de programme stocké sur un support lisible par ordinateur pour réaliser les étapes du procédé selon l'une quelconque des revendications 1 à 6 lorsque ledit programme d'ordinateur est exécuté sur une unité de commande électronique (200 ; 500) ou un autre ordinateur (210 ; 500) connecté à l'unité de commande électronique (200 ; 500).
